(19) Europäisches Patentamt
European Patent Office
Office européen des brevets

(11) EP 0 648 345 B1

(12) EUROPÄISCHE PATENTSCHRIFT

(45) Veröffentlichungstag und Bekanntmachung des Hinweises auf die Patenterteilung:
**10.09.1997 Patentblatt 1997/37**

(21) Anmeldenummer: **93913019.1**

(22) Anmeldetag: **21.06.1993**

(51) Int Cl.[6]: **G02F 1/137**, G09G 3/36

(86) Internationale Anmeldenummer:
**PCT/EP93/01574**

(87) Internationale Veröffentlichungsnummer:
**WO 94/01802 (20.01.1994 Gazette 1994/03)**

(54) **VERFAHREN ZUR STABILISIERUNG DER SMEKTISCHER LAGEN IN FERROELEKTRISCHEN FLÜSSIGKRISTALLDISPLAYS UND VORRICHTUNG**

METHOD OF STABILISING SMECTIC LAYERS OF FERRO-ELECTRIC LIQUID CRYSTAL DISPLAYS AND CORRESPONDING DEVICE

METHODE DE STABILISATION DES COUCHES SMECTIQUES D'AFFICHAGES A CRISTAUX LIQUIDES FERROELECTRIQUES ET DISPOSITIF

(84) Benannte Vertragsstaaten:
**DE FR GB**

(30) Priorität: **03.07.1992 DE 4221784**

(43) Veröffentlichungstag der Anmeldung:
**19.04.1995 Patentblatt 1995/16**

(73) Patentinhaber:
- **HOECHST AKTIENGESELLSCHAFT**
  **65926 Frankfurt am Main (DE)**
- **MATSUSHITA ELECTRIC INDUSTRIAL CO., LTD.**
  **Kadoma-shi, Osaka 571 (JP)**

(72) Erfinder:
- **JUNGBAUER, Dietmar**
  **D-64331 Weiterstadt (DE)**
- **RIEGER, Heinz, Joachim**
  **D-6238 Hofheim am Taunus (DE)**
- **ESCHER, Claus**
  **D-6238 Hofheim am Taunus (DE)**
- **ILLIAN, Gerhard**
  **Nerimaku, Tokyo 176 (JP)**
- **NAGAO, Kazuya**
  **Kawagoe City, Saitama 350 (JP)**
- **MURAKAMI, Mikio**
  **Kakegawa-shi, Saitama-ken (JP)**
- **UOMURA, Tsuyoshi**
  **Kadoma-City, Osaka (JP)**
- **OHNISHI, Hiroyuki**
  **Ikeda-City, Osaka (JP)**
- **FUJIWARA, Shozo**
  **Tharaki-City, Osaka (JP)**

(56) Entgegenhaltungen:
**EP-A- 0 440 392** **EP-A- 0 451 820**

- **JAPANESE JOURNAL OF APPLIED PHYSICS, LETTERS, Bd. 30, Nr. 7A, Juli 1991, Tokyo, JP, SS L1189-L1191, XP000223923; K. NAGAO ET AL.: 'Temperature Dependences of Effective Cone Angles of Surface-Stabilized Ferroelectric Liquid Crystal: Correlation with Layer Structure Changes Caused by Electrical Square Waves'**
- **JAPANESE JOURNAL OF APPLIED PHYSICS, LETTERS, Bd. 28, Nr. 3, März 1989, Tokyo, JP, SS L483-L486, XP000244875; Y. SATO ET AL.: 'High Quality Ferroelectric Liquid Crystal Display with Quasi-Bookshelf Layer Structure'**
- **PROCEEDINGS 6TH INTERNATION SYMPOSIUM ON ELECTRETS September 1988, Oxford, GB, SS 334-338; H.-R. DÜBAL ET AL.: 'Electro-Optical Behaviour of Ferroelectric Liquid Crystal (FLC) Mixtures'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Schalt- und Anzeigevorrichtungen, die ferroelektrische Flüssigkristall-Mischungen enthalten sind beispielsweise aus EP-B 0 032 362 (= US-A 4 367 924) bekannt. Flüssigkristallichtventile sind Vorrichtungen, die z.B. aufgrund elektrischer Beschaltung ihre optischen Transmissionseigenschaften derart ändern, daß durchfallendes (und gegebenenfalls wieder reflektiertes) Licht intensitäts- oder phasenmoduliert wird. Mehrere solcher Lichtventile lassen sich zu Flüssigkristalldisplays (LCDs) zusammenfassen. Beispiele sind die bekannten Uhren- und Taschenrechneranzeigen oder Flüssigkristalldisplays im OA- (office automation) oder TV- (television) Bereich. Dazu zählen aber auch optische Verschlüsse, sogenannte "light shutter", wie sie in Kopiermaschinen, Druckern etc. eingesetzt werden. Auch sogenannte "spatial light modulators" zählen zum Anwendungsbereich von Flüssigkristall-Lichtventilen (siehe Liquid Crystal Device Handbook, Nikkan Kogyo Shimbun, Tokyo, 1989; ISBN 4-526-02590-9C 3054 und darin zitierte Arbeiten).

Die elektrooptischen Schalt- und Anzeigevorrichtungen sind so aufgebaut, daß die FLC-Schicht beiderseitig von Schichten eingeschlossen ist, die üblicherweise, in dieser Reihenfolge ausgehend von der FLC-Schicht, mindestens eine Orientierungsschicht, Elektroden und eine Begrenzungsscheibe (z.B. aus Glas) sind. Außerdem enthalten sie einen Polarisator, sofern sie im "guest-host"- oder im reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten wie z.B. Diffusionssperr- oder Isolationsschichten enthalten.

Solche Orientierungsschichten bringen, gemeinsam mit einem hinreichend klein gewählten Abstand der Begrenzungsscheiben, die FLC-Moleküle der FLC-Mischung in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d.h. FLC-Displays sind bistabil schaltbar. Die Schaltzeiten sind umgekehrt proportional zur spontanen Polarisation der FLC-Mischung und liegen im Bereich von µs.

Als Hauptvorteil der FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlich-sequenziellen Verfahren ("Multiplex-Verfahren") ansteuerbaren Zeilen, das bei FLC Displays im Gegensatz zu herkömmlichen LC-Displays praktisch unbegrenzt ist.

Bei ferroelektrischen Flüssigkristallen (FLC) ist bei der praktischen Anwendung in Displays (N.A. Clark, S.T. Lagerwall, Appl. Phys. Lett. 36 (1980) 899; K.Kondo et al. Jpn. J. Appl. Phys. 27 (1988) 464; HOE 89/F 157) eine einheitliche und vor allem unveränderliche Ausrichtung der smektischen Lagen/Schichten erforderlich. Die Lagennormalen verlaufen dabei annähernd parallel zur Displayebene; ihre mittlere Richtung sollte über der Displayfläche gleich bleiben. Dadurch lassen sich die verwendeten Polarisatoren relativ zum Flüssigkristall so ausrichten, daß maximaler Kontrast und/oder maximale Helligkeit über das gesamte Display erzielt werden kann.

Beim Schaltprozess werden die Moleküle ohne Veränderung der Schichtnormalen relativ zu diesen in Zustände geschaltet, die die Vorzugsrichtung des anisotropen Brechungsindex in der Displayebene verändern. Physikalisch ideal ist dabei eine Winkeländerung von 45° bei Verwendung des Doppelbrechungseffektes und 90° bei Einsatz im "guest host" Modus.

Beim Orientierungsprozess während der Herstellung des Displays wird der Flüssigkristall meist erhitzt um dann wieder bis auf Raumtemperatur abgekühlt zu werden. Während des Abkühlens, besonders beim Übergang aus der smektischen A-Phase in die smektische C-Phase, reduziert sich im allgemeinen die smektische Schichtdicke und führt zu der sogenannten Chevronstruktur (Definition: T.P. Rieker et al., Phys. Rev. Lett. 59, 2658), die wiederum eine deutliche Reduzierung der Winkeländerung der Vorzugsrichtung des anisotropen Brechungsindex beim Schalten im Display bewirkt und damit z.B. die maximal mögliche Helligkeit einschränkt.

Eine Möglichkeit, den maximalen Schaltwinkel dennoch zu realisieren, besteht in der sogenannten Texturumwandlung mittels Wechselfeld, bei der die im Chevron abgekippten smektischen Lagen zur "Quasi Bookshelf Geometrie" (Definition: R. Dübal, C. Escher, D. Ohlendorf, Proc. of the 6th Int. Symp. Electrets, Oxford, UK, p 344; Sato et al., Jap. J. Appl. Phys. 28, L 483 (1988)) aufgerichtet werden, dies kann z.B. bei Raumtemperatur oder bei erhähter, etwa der maximalen Arbeitstemperatur erfolgen.

Es hat sich nun gezeigt, daß beim Aufheizen eines Displays und Überschreitung einer kritischen Temperatur oberhalb der Temperatur der Feldbehandlung die bis dahin in der Displayebene unveränderten Schichtnormalen abkippen können (Z. Zhuang, N.A. Clark, M.R. Meadows, Phys. Rev. A, 45 (10), 1992.). Beim Abkühlen entsteht dann wieder eine Chevrongeometrie. Bei wiederholtem Aufheizen ohne Feldbehandlung tritt ein weiteres Abkippen erst dann auf, wenn die bis dahin nach der ursprünglichen Feldbehandlung maximal erreichte Temperatur in der Sc*-Phase überschritten wird. Im Falle einer weiteren Feldbehandlung ist der Effekt bei weiterem Aufheizen und Abkühlen jedoch kumulativ und vergrößert sich. Die dauerhafte Funktion des Displays wird dadurch wegen der Verschlechterung von Kontrast und Helligkeit und wegen des Auftretens von Geisterbildern in der Praxis stark gefährdet, was die Technik der Feldbehandlung insgesamt in Frage stellt. Ohne jegliche Feldbehandlung konnte das Lagenabkippen bisher nicht

beobachtet werden.

Es wurde nun überraschend gefunden, daß sich der oben beschriebene kumulative Effekt reduziert, wenn sich während der oben beschriebenen Zyklen oberhalb einer kritischen Temperatur der eingeschriebene Schaltzustand ändert.

Die kritische Temperatur definiert sich dadurch, daß der kumulative Effekt des Lagenkippens bei einer definierten Anzahl von Heizzyklen, bei denen diese Temperatur jeweils erreicht wird, einen bestimmten Toleranzwert erreicht.

Gegenstand der Erfindung ist somit ein Verfahren zur Stabilisierung der räumlichen Orientierung der smektischen Schichten in einem FLC-Schalt- und/oder Anzeigeelement, bei dem durch elektrische Feldbehandlung die ursprüngliche Lage der smektischen Schichten modifiziert wurde und eine entsprechende Vorrichtung, gekennzeichnet durch die Merkmale der Ansprüche 1 und 9.

So kann z.B. bei jedem Überschreiten der kritischen Temperatur der Schaltzustand maximal einmal gewechselt werden. Vorzugsweise kann darüber hinaus dem Umstand, daß der Effekt bei höheren dabei erreichten Maximaltemperaturen stärker ausgeprägt ist, durch eine Gewichtung der eingestellten Schaltzustände bei häufigem Überschreiten der kritischen Temperatur Rechnung getragen werden, je nachdem, welche Maximaltemperatur in welchem Schaltzustand bei vorhergehenden Heizphasen erreicht wurde.

Eine vorteilhafte Wichtung kann beispielsweise anhand einer Eichkurve erfolgen, die den Temperaturverlauf des Abkippwinkels der smektischen Schichten beschreibt. Diese Eichkurve ist vorher zu ermitteln und in geeigneter, dem Fachmann bekannter Weise, in die elektronische Steuerung der Adressierung des Lichtventils zu implementieren.

Nach einer weiteren bevorzugten Ausführungsform der Erfindung wird das Lagenabkippen dadurch verhindert, daß bei Überschreiten der kritischen Temperatur die Schaltzustände durch elektrische Ansteuerung immer wieder gewechselt werden. Dies kann durch elektrische Feldbehandlung wie bei der Texturumwandlung und/oder durch kurze Schaltimpulse geschehen; letzteres ist energiesparend. Der zeitliche Abstand der Schaltwechsel kann insbesondere von der Temperaturvariation und von der Größe des zu erwartenden Effektes abhängig gemacht werden. Der erwünschte Effekt wird umso vollständiger und sicherer erzielt, je höher die Schaltwechselfrequenz gewählt wird. Auf der anderen Seite ist aus Gründen der Energieersparnis eine niedrige Schaltwechselfrequenz wünschenswert. Beim Abkühlvorgang, bei gleichbleibender Temperatur und bei Erreichen einer Temperatur oberhalb der Sc*-Phase kann zu diesem Zwecke gegebenenfalls auf ein weiteres Schalten verzichtet werden. Der bevorzugte Frequenzbereich liegt zwischen einem Schaltwechsel pro Tag und der maximalen Schaltfrequenz des Flüssigkristalls. Nach einem Temperaturzyklus kann bei Erreichen der gewünschten Temperatur wieder eine Texturumwandlung erfolgen und damit der ursprüngliche Zustand schon nach einem Zyklus wiederhergestellt werden. Ein weiterer Vorteil dieser Methode ist, daß jedes Pixel automatisch die richtige Korrektur vornimmt ungeachtet gewisser Temperaturdifferenzen zwischen Pixeln; auch ist in diesem Falle eine genaue vorausgehende Kenntnis des Lagenkippens bei Temperaturveränderung nicht notwendig.

Als Signalform für den Schaltwechsel kommen kontinuierliche (z.B. Rechteck- und Sinussignale) und/oder gepulste elektrische Adressierungen in Frage. Es kann das für den normalen Betrieb des Lichtventils benutzte Adressierungsschema verwendet werden. Weiterhin wurde gefunden, daß Signale, die Pausenperioden zwischen den gegensätzlich gepolten Pulsen enthalten, unter Umständen wirkungsvoller sind als solche ohne Pausenperiode.

Das oben beschriebene Schalten im Wechsel kann im Prinzip mit jedem Bildschirmmuster erfolgen. Hierbei ist das Invertieren des zuletzt gezeigten Bildes von besonderer Qualität, da hierbei die Bildinformation erhalten bleibt. Zusätzlich weist der Vorgang der Bildinversion, zumindest im regulären Betrieb, den Benutzer auf dem Umstand der hohen Temperatur hin.

Das Verfahren kann auch auf Displays angewendet werden, bei denen die Bookshelf Geometrie durch Scheren erzeugt wird.

Für das erfindungsgemäße Verfahren ist eine permanente Stromversorgung, z.B. durch einen Akku oder Batterien, notwendig, um die elektrische Adressierung auch durchzuführen, wenn das Display nicht benutzt wird (im "ausgeschalteten Zustand"). Die permanente Stromversorgung kann auch für andere Funktionen mitbenutzt werden (Uhr, Speicher, etc.). Weiterhin können Temperatur und/oder Temperaturänderungen des Displays mittels Sensor/Sensoren zur Steuerung des erfindungsgemäßen Verfahrens erfaßt und/oder gespeichert werden. In der elektronischen Steuerung müssen die angewandten Verfahren implementiert sein, so daß die erfindungsgemäße Ansteuerung des Displays erfolgen kann.

Bei einem möglichen Abkippen der Lagen bei Abkühlen auf tiefe Temperaturen kann entsprechend verfahren werden.

Das Verfahren kann auch genutzt werden um andere unerwünschte Effekte, wie den sogenannten Ghost Effekt (surface memory effect) herauszumitteln. Es kann daher von Vorteil sein, ohne Einschränkung der Temperatur das Display im "ausgeschalteten Zustand" erfindungsgemäß anzusteuern.

Durch geeignete Wahl der Schaltwechsel kann gegebenenfalls auch jedes bestimmte Lagenabkippen eingestellt werden.

Weiterhin Gegenstand der Erfindung ist eine Vorrichtung zur Stabilisierung der räumlichen Orientierung der smektischen Schichten in einem FLC-Schalt- und/oder Anzeigeelement, bei dem durch elektrische Feldbehandlung die ursprüngliche Geometrie der smektischen Schichten modifiziert wurde, enthaltend

a) eine permanente Stromversorgung,
b) Treiber ICs,
c) mindestens einen Temperatursensor,
d) mindestens ein Steuerelement, welches Informationen über Temperatur und/oder Betrieb/Nichtbetrieb des Displays und/oder Schaltzustände sowie gegebenenfalls gespeicherte Werte der Eichkurve und Vorgeschichte des Displays umsetzt in die entsprechenden Schaltwechselzustände,

sowie gegebenenfalls
e) einen Speicher.

Durch Anwendung des erfindungsgemäßen Verfahrens wird eine dauerhafte Funktion der Schalt- und Anzeigevorrichtung auch bei wiederholtem Regenerieren der "Quasi Bookshelf-Geometrie" gewährleistet, eine Verschlechterung des Kontrastes und der Helligkeit und das Auftreten von Geisterbildern vermieden.

Das erfindungsgemäße Verfahren kann in allen Arten von optischen Schalt- und/oder Anzeigevorrichtungen Anwendung finden, die ferroelektrische Flüssigkristalle enthalten oder elektroklines Schalten ermöglichen (Definition von elektroklinem Schalten: S. Garoff et al. Phs. Rev. Lett. 38 (1977) 848), z.B. in SSFLC-(surface stabilized ferroelectric liquic crystall); SBF (short birefringence ferroelectric) oder DHT (deformed helix ferroelectric)-Displays, wobei alle diese entweder im Guest-Host- oder im Doppelbrechungsmodus betrieben werden können.

Die Erfindung wird durch die Beispiele näher erläutert:

Beispiele

Für die Beispiele wird folgende FLC Mischung verwendet:
(Die Zahlenangaben stehen für Mol-%)

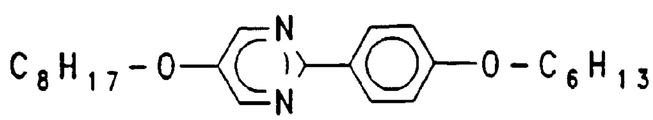

9,05

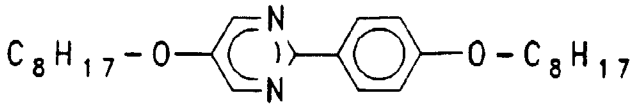

4,18

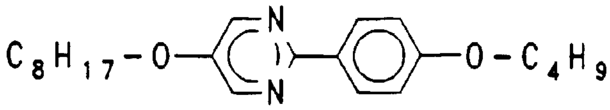

9,54

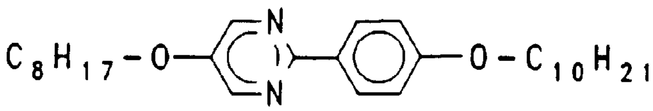

7,60

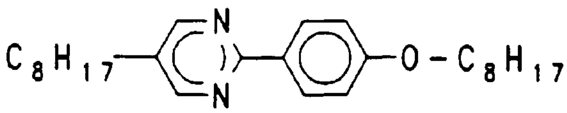

13,00

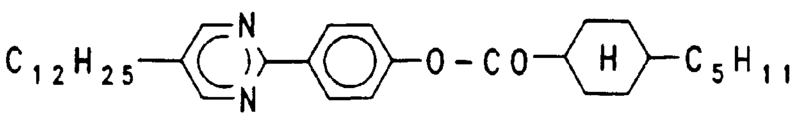

14,33

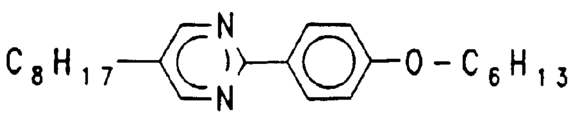

14,49

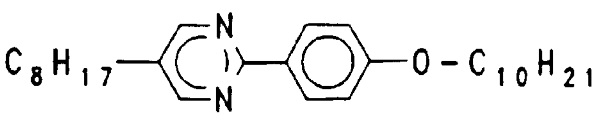

9,66

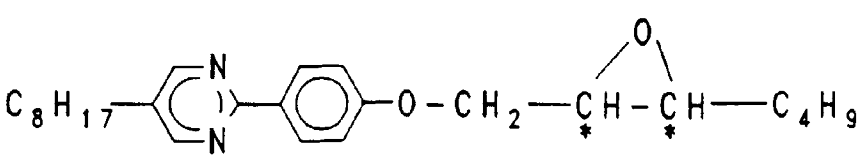

10,5

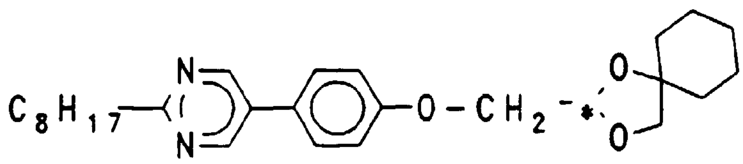

1,99

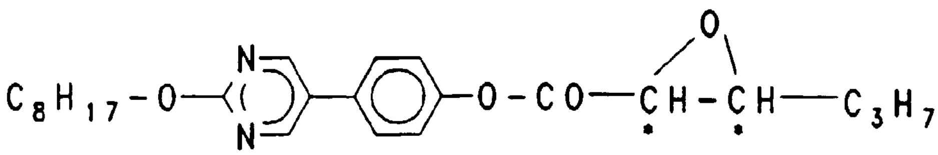

5,12

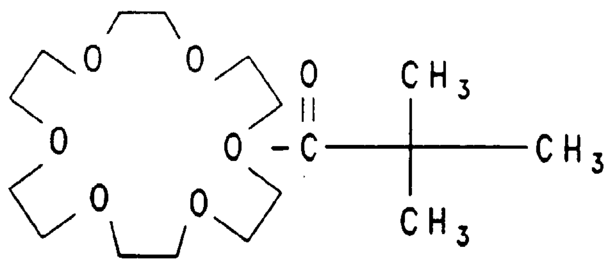

0,5

Die Mischung zeigt die Phasenfolge: $S_c$* 62,5 $S_A$ 69 N* 83 I.

Beispiel 1

Eine oben aufgeführte FLC-Mischung wird in eine 2,5 µm Doppelpixelzelle mit ITO-Elektroden und einer Orientierungsschicht aus einem an der Oberfläche modifizierten Maleinimid-Styrolcopolymer gefüllt. Zur Modifizierung der Oberfläche dient die Verbindung Z1

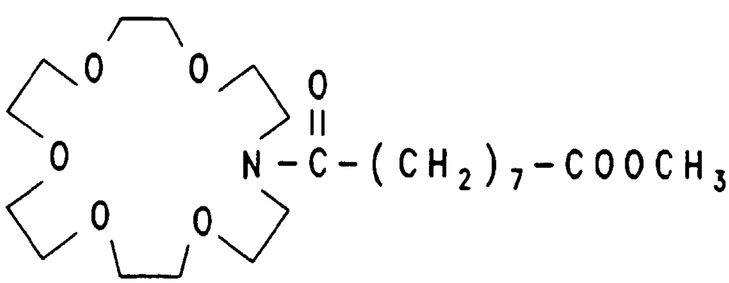

Solche Zellen sind in der deutschen Patentanmeldung P 42 12 893.5 beschrieben. Es werden folgende Heizzyklen durchgeführt:

1. Zyklus: Texturumwandlung (10 Hz, Rechteck 15 V/µm, 3 min) bei 25°C, beide Pixel in Dunkelzustand versetzt rechtes Pixel mit Ansteuerungsschema geschaltet (200 ms Pulsabstand/50 µs Pulsbreite (alternierende bipolare Rechteckpulse)) Aufheizen auf 63.5°C (1K oberhalb $S_C$*-$S_A$) in 1 min, Messung des Lagenabkippens (LA) Abkühlen auf 25°C Texturumwandlung Messung des Lagenabkippens (LA)

2. Zyklus: wie 1. Zyklus

3. Zyklus: wie 1. Zyklus, aber Aufheizen nur bis 55°C tempern bei dieser Temperatur über 17 h

4. Zyklus: wie 1. Zyklus, aber 2 sec Pulsabstand und 500 ms Pulsbreite, Aufheizen mit 6 K/min

Die Messung des Lagenabkippens erfolgt durch Beobachtung unter einem Polarisationsmikroskop. Die Ergebnisse sind in Tabelle 1 zusammengefaßt.

Tabelle 1

| Lagenabkippen (LA) in [°] | | 1. Zyklus | 2. Zyklus | 3. Zyklus | 4. Zyklus |
|---|---|---|---|---|---|
| linkes Pixel gesamtes LA bei hoher Temperatur | | 7.3 | 15.0 | ./. | ./. |
| linkes Pixel LA bei 25°C | gesamt | 7.5 | 13.7 | 17.0 | 26.7 |
| | Differenz zum Vorzyklus | 7.5 | 6.2 | 4.3 | 9.7 |
| rechtes Pixel gesamtes LA bei hoher Temperatur | | 0.0 | 0.0 | 0.0 | 0.0 |
| rechtes Pixel gesamtes LA bei 25° | | 0.0 | 0.0 | 0.1 | 0.0 |

Die erhaltenen Werte belegen, daß bei Anwendung des erfindungsgemäßen Verfahrens ein Lagenabkippen verhindert wird.

Beispiel 2

Eine obengenannte FLC-Mischung wird in eine 1,5 µm Zelle mit ITO-Elektroden und einer Orientierungsschicht aus einem siliziumhaltigen organischen Material gefüllt.

Folgende Heizzyklen werden mit verschiedenen Feldformen durchgeführt:

Texturumwandlung (10 Hz, Rechteck 30 V/1,5 µm, 10 sec) bei 25°C,

1. Zyklus: Aufheizen auf 60°C in 1 min, Abkühlen auf 25°C, Texturumwandlung, Messung von Kontrastverhältnis und Lagenabkippen

2. bis 4. Zyklus: wie 1. Zyklus

In den Zellen 1 bis 4 werden folgende Feldformen angewendet:

Zelle 1: kein elektrisches Feld,
Zelle 2: 2V 100 msec Pulse mit 400 msec Pause zwischen entgegengesetzt gepolten Pulsen,
Zelle 3: 3V 100 msec kontinuierliche Rechteckpulse,
Zelle 4: 15V 1 msec Pulse mit 99 msec Pause zwischen jedem Zyklus.

Die Ergebnisse sind in Tabelle 2 zusammengefaßt.

| Zelle | * | Nach Texturumwandlung bei 25°C | 1. Zyklus | 2. Zyklus | 3 .Zyklus | 4 . Zyklus |
|---|---|---|---|---|---|---|
| 1 | KV | 200 | 70 | 30 | 20 | 10 |
| | LA | 0 | 2.1 | 4.2 | 6.2 | 8.3 |
| 2 | KV | 200 | 190 | 190 | 190 | 190 |
| | LA | 0 | 0 | 0 | 0 | 0 |
| 3 | KV | 200 | 120 | 100 | 90 | 80 |
| | LA | 0 | 1.2 | 1.9 | 2.2 | 2.7 |
| 4 | KV | 200 | 20 | 20 | 20 | 20 |
| | LA | 0 | 0.6 | 2 | 2.1 | 2.3 |

* Kontrastverhältnis (KV)
Lagenabkippen (LA) in [°]

Nach diesen Ergebnissen erscheint unter diesen Bedingungen die Feldform mit den Pausen zwischen entgegengesetzt gepolten Pulsen (Zelle 2) am wirkungsvollsten.

## Patentansprüche

1. Verfahren zur Stabilisierung der räumlichen Orientierung der smektischen Lagen in der Displayebene in einem FLC-Schalt- und/oder Anzeigeelement (Display) bei dem eine ursprüngliche Chevron Geometrie der smektischen Lagen durch elektrische Feldbehandlung in eine Quasi-Bookshelf-Geometrie überführt worden ist, dadurch gekennzeichnet, daß man

    a) eine kritische Temperatur ermittelt, die so definiert ist, daß der kumulative Effekt des Abkippens der smektischen Lagen in der Displayebene bei einer definierten Anzahl von Heizzyklen, bei denen diese Temperatur jeweils erreicht wird, einen bestimmten Toleranzwert erreicht, der aus der Verschlechterung von Kontrast und Helligkeit sowie dem Auftreten von Geisterbildern, verursacht durch das Abkippen der Lagen, bestimmt wird; und/oder eine kritische Temperatur ermittelt, die so definiert ist, daß der kumulative Effekt des Abkippens der smektischen Lagen in der Displayebene bei einer definierten Anzahl von Abkühlzyklen, bei denen diese Temperatur jeweils erreicht wird, einen bestimmten Toleranzwert erreicht, der aus der Verschlechterung von Kontrast und Helligkeit sowie dem Auftreten von Geisterbildern, verursacht durch das Abkippen der Lagen, bestimmt wird;

    b) das Display mit einer permanenten Stromversorgung versieht;

    c) das Display mit einem Sensor versieht, der die Temperatur des Displays feststellt;

    d) bei Erreichen der kritischen Temperatur bzw. Temperaturen den Flüssigkristall alternierend schaltet

    und/oder daß man

    e) das Display mit einer permanenten Stromversorgung versieht und

    f) im ausgeschalteten Zustand des Displays den Flüssigkristall ohne Einschränkung der Temperatur mit einer Frequenz von einem Schaltwechsel pro Tag bis zur maximalen Schaltfrequenz des Flüssig kristalls alternierend schaltet.

2. Verfahren nach Anspruch 1, dadurch gekennzeichnet, daß nach jedem neuerlichen Überschreiten der kritischen Temperatur der Schaltzustand maximal einmal gewechselt wird.

3. Verfahren nach Anspruch 1 und/oder 2, dadurch gekennzeichnet, daß eine Gewichtung der Häufigkeit der eingestellten Schaltzustände erfolgt.

4. Verfahren nach Anspruch 1, dadurch gekennzeichnet, daß oberhalb und/oder unterhalb der kritischen Temperatur (en) die Schaltzustände immer wieder gewechselt werden.

5. Verfahren nach einem oder mehreren der Ansprüche 1 bis 4, dadurch gekennzeichnet, daß nur bei steigender Temperatur nach Überschreiten der kritischen Temperatur und nur im Temperaturbereich der $S_c$*-Phase alternierend geschaltet wird.

6. Verfahren nach einem oder mehreren der Ansprüchen 1 bis 4, dadurch gekennzeichnet, daß nur bei fallender Temperatur nach Unterschreiten der kritischen Temperatur alternierend geschaltet wird.

7. Verfahren nach einem oder mehreren der Ansprüche 1 bis 4, dadurch gekennzeichnet, daß im angeschalteten Zustand der Schalt- und/oder Anzeigevorrichtung der Flüssigkristall ohne Einschränkung der Temperatur mit einer Frequenz von einem Schaltwechsel pro Tag bis zur maximalen Schaltfrequenz des Flüssigkristalls alternierend geschaltet wird.

8. Verfahren nach einem oder mehreren der Ansprüche 1 bis 7, dadurch gekennzeichnet, daß die Signale für den Schaltwechsel des Flüssigkristalls Pausenperioden zwischen entgegengesetzt gepolten Pulsen aufweisen.

9. Vorrichtung zur Stabilisierung der räumlichen Orientierung der smektischen Lagen in der Displayebene in einem FLC-Schalt- und/oder Anzeigeelement (Display) bei dem eine ursprüngliche Chevron Geometrie der smektischen Lagen durch elektrische Feldbehandlung in eine Quasi-Bookshelf-Geometrie überführt worden ist, durch ein Verfahren nach einem oder mehreren der Ansprüche 1 bis 8, enthaltend

a) eine permanente Stromversorgung,

b) Treiber ICs,

c) mindestens einen Temperatursensor, der die Temperatur des Displays mit der/den kritischen Temperatur (en) vergleicht,

d) mindestens ein Steuerelement, welches Informationen über Temperatur und/oder Betrieb/Nichtbetrieb des Displays und/oder Schaltzustände sowie gegebenenfalls gespeicherte Werte einer Eichkurve und der Vorgeschichte des Displays umsetzt in die entsprechenden Schaltwechselzustände,

sowie gegebenenfalls
e) einen Speicher.

**10.** FLC-Schalt und/oder Anzeigeelement, enthaltend eine Vorrichtung gemäß Anspruch 9.

## Claims

**1.** A process for the stabilization of the spatial alignment of the smectic layers in the display plane (display) in an FLC switching and/or display element in which an original chevron geometry of the smectic layers has been converted into a quasi-bookshelf geometry by electrical field treatment, wherein

a) a critical temperature is determined which is defined in such a way that the cumulative effect of the tilt of the smectic layers in the display plane achieves a certain tolerance value at a defined number of heating cycles at which this temperature is in each case achieved, this tolerance value being determined from the impairment in contrast and brightness and the occurrence of ghost images caused by the tilting of the layers; and/or a critical temperature is determined in such a way that the cumulative effect of the tilting of the smectic layers in the display plane achieves a certain tolerance value at a defined number of cooling cycles at which this temperature is in each case achieved, this tolerance value being determined from the impairment in contrast and brightness and the occurrence of ghost images caused by the tilting of the layers;

b) the display is provided with a permanent power supply;

c) the display is provided with a sensor which determines the temperature of the display;

d) on reaching the critical temperature or temperatures, the liquid crystal is switched alternately,

and/or wherein

e) the display is provided with a permanent power supply and
f) in the switched-off state of the display, the liquid crystal is switched alternately, without restricting the temperature, at a frequency of from one switch per day to the maximum switching frequency of the liquid crystal.

**2.** The process as claimed in claim 1, wherein the switching state is changed at most once each time the temperature again exceeds the critical temperature.

**3.** The process as claimed in claim 1 and/or 2, wherein the frequency of the switching states formed is weighted.

**4.** The process as claimed in claim 1, wherein the switching states are always changed again above and/or below the critical temperature(s).

**5.** The process as claimed in one or more of claims 1 to 4, wherein the switching and/or display element is only switched alternately in the case of rising temperature after the critical temperature is exceeded and only in the temperature range of the $S_c$* phase.

6. The process as claimed in one or more of claims 1 to 4, wherein the switching and/or display element is only switched alternately in the case of falling temperature after the temperature falls below the critical temperature.

7. The process as claimed in one or more of claims 1 to 4, wherein, in the switched-on state of the switching and/or display device, the liquid crystal is switched alternately, without restriction of the temperature, at a frequency of from one switch per day to the maximum switching frequency of the liquid crystal.

8. The process as claimed in one or more of claims 1 to 7, wherein the signals for the switching of the liquid crystal have pause periods between pulses of opposite polarity.

9. A device for stabilizing the spatial alignment of the smectic layers in the display plane (display) in an FLC switching and/or display element in which an original chevron geometry of the smectic layers has been converted into a quasi-bookshelf geometry by electrical field treatment, by a process as claimed in one or more of claims 1 to 8, which device contains

a) a permanent power supply,

b) driver ICs,

c) at least one temperature sensor which compares the temperature of the display with the critical temperature (s),

d) at least one control element which converts information on temperature and/or operation/non-operation of the display and/or switching states and any stored values of a calibration curve and previous history of the display into the corresponding switching change states,

and, if desired,
e) a memory.

10. An FLC switching and/or display element containing a device as claimed in claim 9.

**Revendications**

1. Procédé pour la stabilisation de l'orientation spatiale des états smectiques dans le plan d'affichage d'un élément (afficheur) d'affichage et/ou de commutation à cristal liquide ferroélectrique, dans lequel on a transformé par application de champ électrique la géométrie à chevrons originale de l'état smectique en géométrie "Quasi-Bookshelf", caractérisé en ce que

a) on détermine une température critique qui est définie de façon telle en ce que l'effet cumulatif du basculement des états smectiques dans le plan de l'afficheur, pour un nombre défini de cycles de chauffage où dans chacun cette température a été atteinte, atteint une certaine valeur de tolérance, que l'on détermine à partir de la dégradation du contraste et de la luminance ainsi que de l'apparition des images fantômes, provoquée par le basculement des états ; et/ou on détermine une température critique qui est définie de façon telle que l'effet cumulatif du basculement des états smectiques dans le plan de l'afficheur pour un nombre défini de cycles de refroidissement où dans chacun cette température est atteinte, atteint une certaine valeur de tolérance, que l'on détermine à partir de la dégradation du contraste et de la luminance ainsi que de l'apparition des images fantômes, provoquée le basculement de l'état ;
b) on munit l'afficheur d'une alimentation permanente en courant ;
c) on munit l'afficheur d'un capteur qui détermine la température de l'afficheur ;
d) lorsqu'on atteint la température critique, respectivement les températures critiques, on opère une commutation alternative du cristal liquide

et/ou en ce que l'on

e) on munit l'afficheur d'une alimentation permanente en courant et
f) lorsque l'afficheur est éteint, on opère une commutation alternative du cristal liquide sans limitation de la température avec une fréquence d'un seul changement de commutation par jour jusqu'à la fréquence de

commutation maximale du cristal liquide.

**2.** Procédé selon la revendication 1, caractérisé en ce qu'après chaque nouveau dépassement de la température critique, on change la commutation au maximum une fois.

**3.** Procédé selon la revendication 1 et/ou 2, caractérisé en ce que l'on effectue une pondération de la fréquence des commutations établies.

**4.** Procédé selon la revendication 1, caractérisé en ce qu'au-dessus et/ou en dessous des températures critiques, on opère toujours un changement de la commutation.

**5.** Procédé selon une ou plusieurs des revendications 1 à 4, caractérisé en ce que l'on n'opère une commutation alternative que lors de l'augmentation de la température après dépassement de la température critique et seulement dans l'intervalle de températures de la phase $S_c^*$.

**6.** Procédé selon une ou plusieurs des revendications 1 à 4, caractérisé en ce que l'on n'opère une commutation alternative que lorsque la température chute après avoir chuté au-dessous de la température critique.

**7.** Procédé selon une ou plusieurs des revendications 1 à 4, caractérisé en ce que dans l'état commuté du dispositif de commutation et/ou d'affichage, on opère une commutation alternative du cristal liquide sans limitation de la température avec une fréquence d'un seul changement de commutation par jour jusqu'à une fréquence maximale de commutation du cristal liquide.

**8.** Procédé selon une ou plusieurs des revendications 1 à 7, caractérisé en ce que les signaux pour les changements de commutation du cristal liquide présentent des pauses entre les impulsions à signes opposés.

**9.** Dispositif pour la stabilisation de l'orientation spatiale d'un état smectique dans le plan d'affichage dans un élément d'affichage et/ou de commutation à cristal liquide ferroélectrique, dans lequel on a transformé la géométrie à chevrons d'origine de l'état smectique en géométrie "Quasi-Bookshelf" par application d'un champ électrique, en utilisant un procédé selon une ou plusieurs des revendications 1 à 8, comportant

a) une alimentation permanente en courant,
b) un amplificateur de circuit intégré,
c) au moins un capteur de température qui compare la température de l'afficheur avec la ou les températures critiques,
d) au moins un élément de contrôle, lequel traduit les informations relatives à la température et/ou l'état allumé/éteint de l'afficheur et/ou les états de commutation ainsi qu'éventuellement les données stockées d'une courbe de calibrage et de l'historique de l'afficheur, en les états de changement de commutation correspondants,

ainsi qu'éventuellement
e) une mémoire.

**10.** Elément d'affichage et/ou de commutation à cristal liquide ferroélectrique contenant un dispositif selon la revendication 9.